# EUROPÄISCHE PATENTSCHRIFT

(11) **EP 2 266 331 B1**
(45) Veröffentlichungstag und Bekanntmachung des Hinweises auf die Patenterteilung: **25.07.2012**
(21) Anmeldenummer: 09720939.9
(22) Anmeldetag: 12.03.2009
(51) Int. Cl.: H04L 12/18, H04W 4/06

(54) **DRAHTLOSES KONFERENZSYSTEM**
WIRELESS CONFERENCE SYSTEM
SYSTÈME DE CONFÉRENCE SANS FIL

(30) Priorität: 12.03.2008 DE 102008013975
(43) Veröffentlichungstag der Anmeldung: 29.12.2010
(73) Patentinhaber: Sennheiser electronic GmbH & Co. KG, 30900 Wedemark (DE); Televic NV., 8870 Izegem (BE)
(72) Erfinder: HILBICH, Norbert, 31535 Neustadt (DE); KÜPKER, Carsten, 30419 Hannover (DE); LYLON, Carl, 8870 Izegem (DE); SCHMIDT, Axel, 30900 Wedemark (DE)
(74) Vertreter: Eisenführ, Speiser & Partner
(86) Internationale Anmeldenummer: PCT/EP2009/052906
(87) Internationale Veröffentlichungsnummer: WO 2009/112543

(56) Entgegenhaltungen:
- EP-A- 1 874 094
- WO-A-2005/017674
- DE-A1-102004 037 856
- US-A- 5 200 951

## Beschreibung

Die vorliegende Erfindung betrifft ein drahtloses Konferenzsystem.

Es sind sowohl drahtlose als auch drahtgebundene Konferenzsysteme bekannt, bei denen sich eine Vielzahl von Konferenzteilnehmem in einem Raum befinden und mittels des Konferenzsystems eine Konferenz abhalten können. Ein derartiges Konferenzsystem weist typischerweise eine Präsidentensprechstelle und eine Vielzahl von Delegiertensprechstellen auf. Die Präsidentensprechstelle dient dabei dazu, die Delegiertensprechstellen zu steuern. Typischerweise ist jedem Konferenzteilnehmer eine eigene Delegiertensprechstelle zugeordnet. Eine Delegiertensprechstelle weist ein Mikrofon sowie eine Mehrzahl von Bedienelementen auf. Wenn ein Konferenzteilnehmer bzw. ein Delegierter sprechen möchte, so kann er eines der Bedienelemente betätigen und wenn die Delegiertensprechstelle durch die Präsidentensprechstelle freigegeben worden ist, dann kann der Konferenzteilnehmer mittels der Delegiertensprechstelle mit dem Rest der Delegierten kommunizieren.

Wenn ein derartiges Konferenzsystem als ein drahtgebundenes Konferenzsystem implementiert wird, dann benötigen derartige Systeme oftmals eine lange Aufbauzeit, da Kabel verlegt werden müssen. Die Kabel wirken oftmals als Fremdkörper im Raum. Erweiterungen des drahtgebundenen Konferenzsystems sind oftmals nur mit einem erheblichen Aufwand möglich.

Drahtlose Konferenzsysteme basieren oftmals auf den Komponenten von drahtlosen Mikrofonsystemen. Hierbei erweist es sich jedoch als nachteilig, dass lediglich eine geringe Anzahl von Kanälen zur drahtlosen Kommunikation zur Verfügung steht. Somit kann es zu einem eingeschränkten Betrieb eines drahtlosen Konferenzsystems kommen. Ferner sind diese Systeme nicht abhörsicher und oftmals umständlich zu bedienen. Des weiteren kann es dazu kommen, dass eine Betriebsgenehmigung für derartige Systeme von Seiten der zuständigen Regulierungsbehörde erfolgen muss. Eine derartige Betriebsgenehmigung ist kostenpflichtig. Ferner kann ein betriebssicherer Betrieb nur mittels Fachpersonal ermöglicht werden.

Wenn die drahtlosen Konferenzsysteme in dem ISM Band bei 2,4 GHz (lizenzfreier Betrieb) betrieben werden, dann muss berücksichtigt werden, dass dieses ISM Band auch von anderen drahtlosen Diensten wie beispielsweise WLAN oder Bluetooth mit benutzt werden.

Als technologischer Hintergrund wird auf die US 5,200,951, EP 1 874 094, DE 103 29 244 A1 und US 2006/0227963 A1 verwiesen.

Das Dokument DE 10 2004 037 856 A1 offenbart ein drahtloses Sprachkonferenz-System unter Verwendung das DECT-Standards.

Es ist eine Aufgabe der vorliegenden Erfindung, ein drahtloses digitales Konferenzsystem vorzusehen, welches einen betriebssicheren Betrieb parallel zu bereits vorhandenen drahtlosen Diensten in einem lizenzierungsfreien Frequenzband ermöglicht.

Diese Aufgabe wird durch ein drahtloses digitales Konferenzsystem gemäß Anspruch 1 und durch ein Verfahren gemäß Anspruch 7 gelöst.

Somit wird ein drahtloses Konferenzsystem mit einer Zentraleinheit mit einer ersten Sende/Empfangseinheit, einer Mehrzahl von Delegiertensprechstellen jeweils mit einer zweiten Sende/Empfangseinheit und zumindest einer Präsidentensprechstelle mit einer dritten Sende/Empfangseinheit vorgesehen. Die erste Sende/Empfangseinheit ist dazu ausgestaltet, mit den zweiten und dritten Sende/Empfangseinheiten drahtlos zu kommunizieren. Die Kommunikation von der ersten Sende/Empfangseinheit zu den zweiten und/oder dritten Sende/Empfangseinheiten stellt eine Downlink-Kommunikation und die Kommunikation von den zweiten und/oder dritten Sende/Empfangseinheiten zu der ersten Empfangseinheit stellt eine Uplink-Kommunikation dar. Die Zentraleinheit weist eine Frequenzscaneinheit zum Scannen von vorab bestimmten Frequenzbändern zur Erfassung von Störern in diesen Frequenzbändern auf. Die Frequenzscaneinheit ist ferner zum Festlegen der Frequenzbänder für die Downlink- und die Uplink-Kommunikation zumindest bei der Initiierung des drahtlosen Konferenzsystems geeignet. Zumindest einige der Delegiertensprechstellen und eine Präsidentensprechstelle sind in einem Konferenzraum vorgesehen. Die Präsidentensprechstelle ist dazu ausgestaltet, die Delegiertensprechstellen zumindest teilweise zu steuern. Die Zentraleinheit weist eine Verbindungsparametereinheit auf, welche zumindest einen Parameter der Kommunikation zwischen der Zentraleinheit und den Delegiertensprechstellen und/oder der Präsidentensprechstelle erfasst und mit vorab eingestellten Schwellwerten vergleicht. Die Zentraleinheit wechselt die Frequenzkanäle für die Kommunikation mit den Delegiertensprechstellen und/oder der Präsidentensprechstelle, wenn der erfasste Parameter in der Kommunikation unter den Schwellwert fällt.

Gemäß einem Aspekt der vorliegenden Erfindung erfasst die Delegiertensprechstelle mittels der zweiten Sende/Empfangseinheit die Qualität der Downlink-Kommunikation und vergleicht diese mit mindestens einem vorab eingestellten Schwellwert. Die Delegiertensprechstelle übermittelt mittels der zweiten Sende/Empfangseinheit eine Anfrage zum Wechseln der Frequenzbänder an die Zentraleinheit.

Gemäß einem weiteren Aspekt der vorliegenden Erfindung weist die Zentraleinheit eine Funktionalitätssteuereinheit zum Steuern der Funktionalität des drahtlosen Konferenzsystems in Abhängigkeit der Uplink- und/oder Downlink-Kommunikation auf. Die Funktionalitätssteuereinheit ist dazu ausgestaltet, die Funktionalität des drahtlosen Konferenzsystems zu reduzieren, wenn die Qualität der Uplink- und/oder Downlink-Kommunikation nicht für die benötigte Betriebssicherheit des drahtlosen Kommunikationssystems ausreicht.

Gemäß einem weiteren Aspekt der vorliegenden Erfindung kann eine der Mehrzahl der Delegiertensprechstellen nur eingeschränkt von der Präsidentensprechstelle gesteuert werden.

Gemäß einem weiteren Aspekt der vorliegenden Erfindung ist die Delegiertensprechstelle dazu ausgestaltet, für die Delegiertensprechstelle spezifische Informationen wie z.B. den Betriebszustand, die Qualität der Verbindung oder die Kennung der Delegiertensprechstelle über die Uplink-Kommunikation an die Zentraleinheit zu senden.

Gemäß einem weiteren Aspekt der vorliegenden Erfindung ist die Zentraleinheit dazu ausgestaltet, Steuersignale an die Delegiertensprechstelle zu senden.

Die Erfindung betrifft ebenfalls ein Verfahren zum Steuern eines drahtlosen Konferenzsystems, das eine Zentraleinheit, eine Mehrzahl von Delegiertensprechstellen und mindestens eine Präsidentensprechstelle aufweist. Zumindest einige der Delegiertensprechstellen und die Präsidentensprechstelle sind in einem Konferenzraum angeordnet. Vorab bestimmte Frequenzbänder werden zur Erfassung von Störern in diesen Frequenzbändern gescannt. Die Frequenzbänder für eine Downlink- und eine Uplink-Kommunikation zwischen den Delegiertensprechstellen und der Präsidentensprechstelle sowie der Zentraleinheit werden zumindest bei Initiierung des drahtlosen Konferenzsystems festgelegt. Zumindest ein Parameter der Kommunikation zwischen der Zentraleinheit und den Delegiertensprechstellen und/oder der Präsidentensprechstelle wird erfasst und der Parameter wird mit vorab eingestellten Schwellwerten verglichen. Die Frequenzkanäle für die Kommunikation zwischen der Zentraleinheit und den Delegiertensprechstellen und/oder der Präsidentensprechstelle werden gewechselt, wenn der erfasste Parameter der Kommunikation unter den Schwellwert fällt. Die Präsidentensprechstelle ist dazu ausgestaltet, die Delegiertensprechstellen zumindest teilweise zu steuern.

Die Erfindung betrifft den Gedanken, ein drahtloses digitales Konferenzsystem vorzusehen, bei welchem eine drahtlose Kommunikation in verschiedenen Frequenzbändern durchgeführt werden kann. Eine Auswahl der zu verwendenden Frequenzbänder und des zu verwendenden Kanals innerhalb der jeweiligen Bänder erfolgt durch eine Zentraleinheit nach einem durchgeführten Frequenzscan. Basierend auf dem Frequenzscan kann eine intelligente Frequenz- und/oder Kanalvenrvaltung implementiert werden, um eine Betriebssicherheit vorzusehen. Mittels der Zentraleinheit kann basierend auf den Standortinformationen und den entsprechenden Frequenz- und Kanalvorgaben eine automatische Frequenz- und Kanalverwaltung erfolgen. Hierbei können die jeweiligen standort- bzw. länderspezifischen gesetzlichen Vorgaben wie beispielsweise Sendeleistung, Frequenznutzung etc. entsprechend mit berücksichtigt werden. Im laufenden Betrieb kann optional die Qualität der Kommunikation überwacht werden und die Qualität der Kommunikation zu den Delegierteneinheiten kann entsprechend abgefragt werden. Optional kann eine Verschlüsselung der Daten erfolgen. Das drahtlose Konferenzsystem kann dynamisch an die entsprechenden Nutzervorgaben angepasst werden, beispielsweise indem die Zeitschlitze bzw. Timeframes für eine optimale Signallaufzeit konfiguriert werden. Um eine hohe Datenrate bei hoher Übertragungszuverlässigkeit zu garantieren, kann ein Mehrträgerverfahren, wie beispielsweise OFDM verwendet werden. Das drahtlose Konferenzsystem kann auch mit einem drahtgebundenen Konferenzsystem kombiniert werden.

Die Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt ein Blockschaltbild eines drahtlosen Konferenzsystems gemäß einem ersten Ausführungsbeispiel;
- Fig. 2: zeigt eine Struktur eines Zeitrahmens bei einer Kommunikation gemäß dem ersten Ausführungsbeispiel;
- Fig. 3: zeigt ein Zeitfenster von Zeitschlitzen bei einer Kommunikation gemäß dem ersten Ausführungsbeispiel; und
- Fig. 4: zeigt ein Blockschaltbild einer Implementierung einer drahtlosen Verbindung gemäß einem Ausführungsbeispiel der Erfindung.

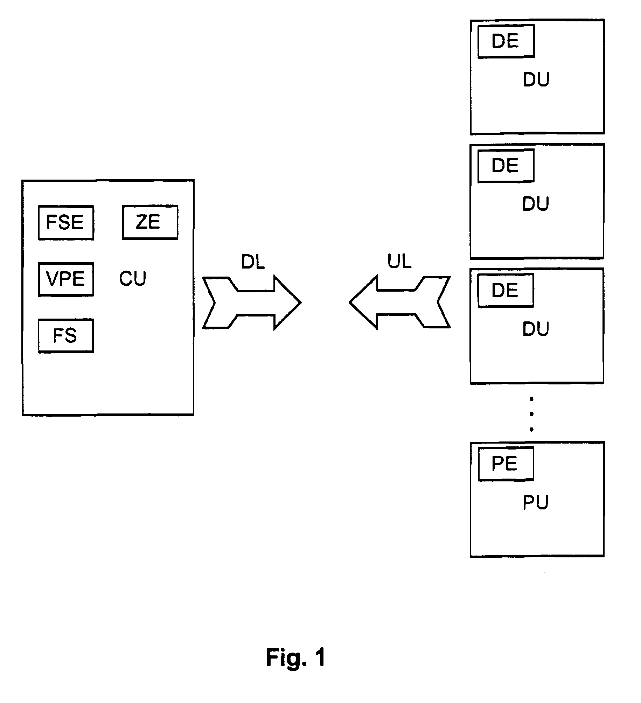

Fig. 1 zeigt ein Blockschaltbild eines drahtlosen Konferenzsystems gemäß einem ersten Ausführungsbeispiel der Erfindung. Das drahtlose Konferenzsystem weist dabei eine zentrale Einheit CU mit einem Sender/Empfänger ZE sowie eine Mehrzahl von Delegierteneinheiten bzw. Delegiertensprechstellen DU sowie eine Präsidentensprechstelle PU auf. Eine Präsidentensprechstelle PU stellt im Wesentlichen eine Delegiertensprechstelle DU mit einigen weiteren Funktionalitäten dar. Die Delegierteneinheiten bzw. die Delegiertensprechstellen DU weisen jeweils einen Transceiver bzw. einen Sender/Empfänger DE auf. Die Präsidentensprechstelle weist ebenfalls einen Transceiver bzw. einen Sender/Empfänger PE auf. Die Kommunikation zwischen der zentralen Einheit CU und der Mehrzahl der Delegierteneinheiten DU bzw. der Präsidentensprechstelle PU erfolgt dabei drahtlos, wobei die Kommunikation von der zentralen Einheit zu der Mehrzahl der Delegierteneinheiten (Delegiertensprechstelle) als Downlink DL und die Kommunikation von der Mehrzahl der Delegierteneinheiten (Delegiertensprechstelle) DU bzw. zu der Präsidentensprechstelle PU zu der Zentraleinheit CU als Uplink UL betrachtet wird. Das drahtlose Konferenzsystem gemäß dem ersten Ausführungsbeispiel weist eine unsymmetrische Bidirektionalität auf, d.h. die Downlink- und Uplink-Kommunikation erfolgt bei unterschiedlichen Datenraten (beispielsweise Downlink-Datenrate 14.34Mbit/s und Uplink-Datenrate 10.24Mbit/s. Jeder Link, d.h. der Downlink DL und der Uplink UL kann mehrere unterschiedliche Kanäle aufweisen, nämlich einen Konferenzkanal, Kontrollkanäle, Dolmetscherkanäle, Delegiertenkanäle und mindestens einen Präsidentenkanal. Die Kanäle können in einem Time Divisional Multi Access TDMA Zugriffsverfahren organisiert sein.

Die Zentraleinheit CU weist eine Frequenzscaneinheit FSE zum Scannen von vorab bestimmten Frequenzbändern auf, um Störer in diesen Frequenzbändern zu erfassen. Die Frequenzscaneinheit FSE dient ferner dazu, Frequenzbänder für die Downlink- und Uplink-Kommunikation festzulegen. Dies kann z.B. bei einer Initiierung des drahtlosen Konferenzsystems erfolgen. Alternativ dazu kann dies auch kontinuierlich oder in regelmäßigen Intervallen erfolgen. Die Zentraleinheit CU weist ferner eine Verbindungsparametereinheit VPE zum Erfassen mindestens eines Parameters der Kommunikation zwischen der Zentraleinheit CU und den Delegiertensprechstellen DU/Präsidentensprechstelle PU auf. Die Verbindungsparametereinheit VPE vergleicht die erfassten Parameter mit vorab eingestellten Schwellwerten. Wenn die erfassten Parameter der Kommunikation unter den Schwellwert fallen, dann wechselt die Zentraleinheit CU die Frequenzkanäle für die Kommunikation mit den Delegiertensprechstellen DU und/oder der Präsidentensprechstelle PU. Die Zentraleinheit CU weist ferner optional eine Funktionalitätssteuereinheit FS zum Steuern der Funktionalität des drahtlosen Konferenzsystems auf. Diese Steuerung der Funktionalität kann in Abhängigkeit der Qualität der Uplink- und/oder Downlink-Kommunikation erfolgen. Hierbei wird die Funktionalität des drahtlosen Konferenzsystems reduziert, wenn die Qualität der Uplink- und/oder Downlink-Kommunikation nicht für die benötigte Betriebssicherheit ausreicht.

Eine Delegierteneinheit weist vorzugsweise mindestens ein Mikrofon und einen Lautsprecher oder einen Audioausgang zur Audiowiedergabe auf.

Die Anzahl der Präsidentensprechstellen und die Anzahl der Delegierteneinheiten kann durch den Betreiber festgelegt werden.

Die Delegierteneinheiten können aufladbare Batterien aufweisen, welche leicht ausgewechselt werden können. Hierbei können sowohl aufladbare als auch nicht aufladbare Batterien verwendet werden.

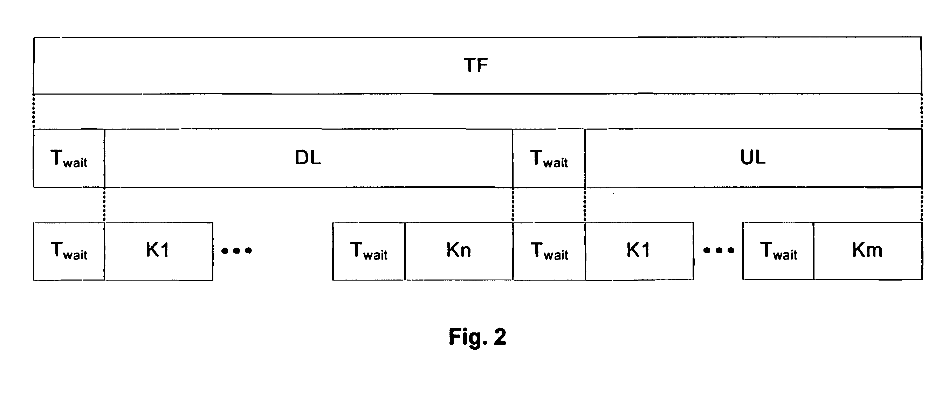

Fig. 2 zeigt die Struktur eines Zeitrahmens bei einer Kommunikation in einem drahtlosen Konferenzsystem von Fig. 1. Als Duplexverfahren ist gemäß dem ersten Ausführungsbeispiel das Time Division Duplex TDD gewählt, wobei die Uplink- und die Downlink-Kommunikation über die Zeitachse separiert sind. Die Downlink-Kommunikation DL kann mehrere Kanäle, Kanal K1 bis Kanal Kn aufweisen. Die Uplink-Kommunikation UL kann eine Mehrzahl von Kanälen, Kanal K1 bis Kanal Km aufweisen. Die Unterteilung in Downlink-Kanäle und Uplink-Kanäle ist dabei flexibel und kann an die entsprechenden Gegebenheiten dynamisch angepasst werden. Wenn somit lediglich eine geringe Anzahl von Uplink-Kanälen UL benötigt werden, dann kann die Latenzzeit zwischen Senden und Empfangen von Audiodaten minimal gehalten werden. Dies ist z.B. vorteilhaft, um eine Lippensynchronität zu gewährleisten. Die verschiedenen Kanäle können sich in ihrer jeweiligen Wertigkeit bzw. Priorität unterscheiden. Beispielsweise weist ein Delegiertenkanal eine geringe Priorität als ein Präsidentenkanal auf. Die Zeitschlitze bzw. Timeslots können von der Zentraleinheit CU zugewiesen werden.

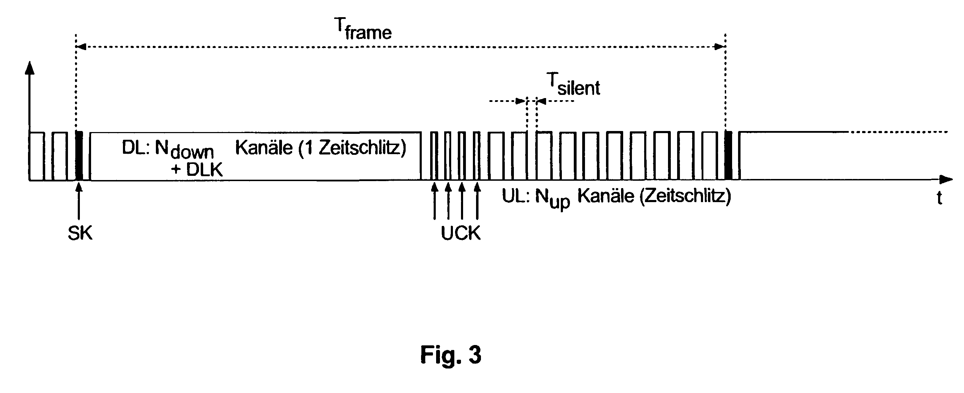

Fig. 3 zeigt eine Darstellung eines Zeitfensters für eine Uplink- und eine Downlink-Kommunikation gemäß der Erfindung. Ein Zeitrahmen bzw. ein Timeframe T_{frame} beginnt vorzugsweise mit einem Synchronisationskanal SK. Anschließend kommt die Downlink-Kommunikation mit N_{down}-Kanälen und mindestens einem Downlink-Steuerkanal DCK. Anschließend kommen die Uplink-Steuerkanäle UCK und die Uplink-Kanäle N_{UP}. Eine Delegierteneinheit DU und/oder eine Präsidentensprechstelle PU erhält einen Uplink-Kanal UL von der Zentraleinheit CU zugewiesen, wenn die Delegierteneinheit DU einen entsprechenden Kommunikationsbedarf anmeldet. Diese Anmeldung kann in einem Zeitfenster der Uplink-Kommunikation, beispielsweise in dem Uplink-Steuerkanal UCK erfolgen. Dies kann beispielsweise durch einen zufallsgesteuerten Zugriff Slotted Aloha auf das Übertragungsmedium ermöglicht werden. Alternativ dazu können auch höherwertige Verfahren für den Zugriff auf die Uplink-Steuerkanäle implementiert werden.

In dem Downlink-Steuerkanal DCK wird für die jeweilige Delegiertensprechstelle ein Uplink-Kanal mit entsprechenden Link- bzw. Verbindungs-Parametem zugewiesen. Der Uplink-Steuerkanal UCK dient hierbei nicht nur der Anmeldung, um einen freien Zeitschlitz zugewiesen zu bekommen, sondern auch der Übermittlung von Zusatzparametem von der Delegierteneinheit DU an die Zentraleinheit CU. Diese Zustandsparameter können beispielsweise die Downlink-Qualität und den Ladezustand der Batterie beinhalten.

Die Übertragung in den Uplink- und Downlink-Kanälen kann durch ein standardisiertes Verfahren erfolgen, welches lediglich die Anforderungen des drahtlosen Konferenzsystems genügen müssen. Hierbei muss eine Mindestdatenraten eingehalten werden, um einen fehlerfreien Betrieb der Konferenzanlage zu garantieren. Mit anderen Worten, eine untere Grenze darf nicht unterschritten werden, während höhere Datenraten möglich sind. Der Physical Layer der drahtlosen Kommunikation basiert vorzugsweise auf dem IEEE 802.11a/b/g Standard, d.h. sowohl Direct Sequence Spread Spectrum DSSS- als auch Orthogonal Frequency Division Multiplex OFDM Verfahren können implementiert werden. Vorzugsweise wird das ISM Band zwischen 2.4GHz und 2.5GHz gemäß dem IEEE 802.11b/g Standard genutzt. In Abhängigkeit von den nationalen Regulierungsbestimmungen der freien Frequenzbänder können die Frequenzbänder zwischen 5 und 6GHz verwendet werden.

Wenn das drahtlose Konferenzsystem in Betrieb genommen wird, dann kann die Zentraleinheit CU z.B. mittels der Frequenzscaneinheit FSE einen Frequenzgang der in Frage kommenden Frequenzbänder durchführen. Die in Frage kommenden Frequenzbänder können dabei vorab gespeichert werden. Für das Frequenzscannen kann die Zentraleinheit CU über einen entsprechenden eigenen Empfänger verfügen. Wenn die Delegierteneinheiten DU aktiviert werden, dann führen sie ebenfalls einen Scan in vorab gespeicherten Frequenzbändern durch. Hierbei suchen die Delegierteneinheiten DU nach Synchronisationsinformationen wie z.B. eine Synchronisationssequenz von der Zentraleinheit CU. Falls die Synchronisationssequenz der Zentraleinheit CU nicht gefunden wird, dann scannen die Delegiertensprechstellen beispielsweise zunächst das untere ISM Band ab. Wenn hier wiederum keine Synchronisationssequenz gefunden worden ist, dann können die Delegierteneinheiten DU das obere ISM Band abscannen. Der Abscanvorgang wird solange wiederholt, bis eine Synchronisationssequenz der Zentraleinheit CU von den Delegierteneinheiten DU gefunden wurde. Die Startfrequenz sowie die Wahl und Reihenfolge der alternativen Frequenzen können von dem Nutzer des drahtlosen Konferenzsystems frei konfiguriert werden, so dass eine Anpassung an die tatsächlichen örtlichen Gegebenheiten vorgenommen werden kann.

Im laufenden Betrieb kann die Zentraleinheit CU Qualitätsparameter für die Kommunikation wie beispielsweise das Signal to Noise Ratio SNR der Uplink- und Downlink-Kommunikation mittels der Verbindungsparametereinheit VPE erfassen und überprüfen. Dies kann kontinuierlich oder in regelmäßigen Intervallen erfolgen. Falls diese(r) Qualitätsparameter unter einen bestimmten vorab eingestellten Grenzwert fällt, dann kann die Zentraleinheit CU ein anderes Frequenzband auswählen und dies den Delegierteneinheiten DU beispielsweise mit Hilfe der Downlink-Steuerkanäle DCK mitteilen. Die entsprechenden Delegierteneinheiten DU können dann den oben beschriebenen Frequenzscanvorgang durchführen, bis sie eine entsprechende Synchronisationssequenz der Zentraleinheit CU gefunden haben.

Die Qualität der Uplink-Kommunikation kann beispielsweise von der Zentraleinheit CU gemessen werden, während die Qualität der Downlink-Kommunikation durch die jeweiligen Delegierteneinheiten DU gemessen bzw. überprüft werden. Wenn die Qualität der Downlink-Kommunikation zu schlecht wird bzw. ein Qualitätsparameter unter einen Schwellwert fällt, dann können die Delegierteneinheiten DU der Zentraleinheit CU mittels der Uplink-Steuerkanäle UCK mitteilen, dass ein Frequenzwechsel benötigt wird und die Zentraleinheit CU kann einen entsprechenden Frequenzwechsel initiieren.

Wenn die Zentraleinheit CU nach einem Frequenzscan festgestellt hat, dass die zur Verfügung stehenden Frequenzbänder nicht für einen einwandfreien Betrieb mit der gesamten Funktionalität ausreicht, dann kann die Zentraleinheit CU mittels der Funktionalitätssteuereinheit FS die Funktionalität des drahtlosen Konferenzsystems reduzieren, um eine Betriebssicherheit des Systems zu erreichen. Dies kann beispielsweise dadurch erfolgen, dass die Anzahl der Präsidenten bzw. Präsidentensprechstellen, dass die Anzahl der gleichzeitig sprechenden Delegierten, die Anzahl der Dolmetscher oder die Anzahl der Datenkanäle reduziert wird.

Der Vorgang des Frequenzscannens wird während des Betriebs wiederholt, um eine gewünschte Qualität der Datenübertragung sicherzustellen. Falls die Datenübertragung nicht der gewünschten Qualität entspricht, dann kann der Frequenzbereich der drahtlosen Kommunikation zu einem Frequenzbereich gewechselt werden, welcher eine betriebssichere drahtlose Kommunikation ermöglicht. Dazu kann der Empfänger ZE der Zentraleinheit CU die in Frage kommenden Frequenzbänder nach Störern abscannen. Wenn keine Störer in den abgetasteten Frequenzbändern vorhanden sind, dann kann die Kommunikation auf dieses Frequenzband umgeschaltet werden. Der Empfänger ZE der Zentraleinheit CU kann dies sowohl unabhängig von dem gesamten System als auch in freien Zeitfenstern durchführen. Die Zentraleinheit CU kann dazu ausgestaltet sein, eine automatische Auswahl der zu betrachtenden Frequenzbereiche durchzuführen. Diese Auswahl kann auf Voreinstellungen basieren. Dies ist insbesondere vorteilhaft, weil das System zunächst nur den bevorzugten Bereich nutzen wird und erst dann in einen anderen Frequenzbereich wechseln wird, wenn keine betriebssichere Übertragung mehr gewährleistet werden kann. Die Vorauswahl kann an die örtlichen Gegebenheiten angepasst werden.

Falls das System aufgrund der vorhandenen und erfassten Störer in dem bevorzugten Frequenzband in ein anderes Frequenzband wechseln muss, dann kann eine Freigabe dieses Frequenzbandes dann erfolgen, wenn die Zentraleinheit mit dem Empfänger ZE sichergestellt hat, dass ein sicherer Betrieb in dem neuen Frequenzbereich möglich ist.

Der Physical Layer basiert vorzugsweise auf einem IEEE Standard, so dass beispielsweise WLAN-Transceiver Bausteine bzw. WLAN-Power Amplifier verwendet werden können. Die MAC und die Baseband-Funktionalität werden beispielsweise in einem FPGA implementiert.

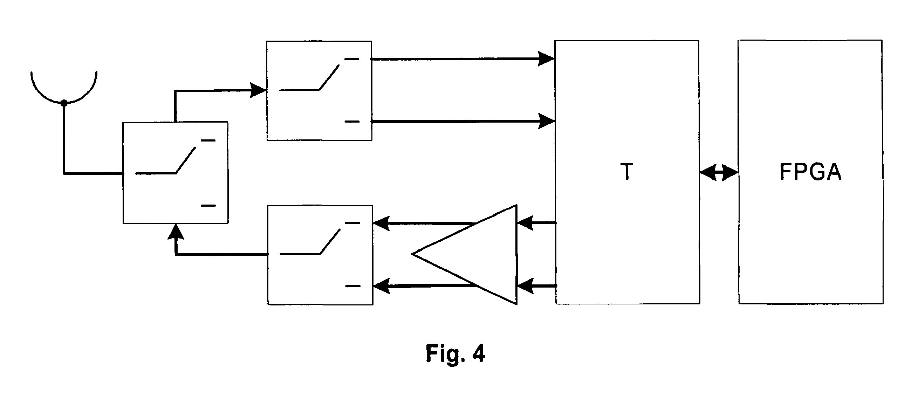

Fig. 4 zeigt ein Blockschaltbild einer Implementierung einer drahtlosen Verbindung gemäß dem ersten Ausführungsbeispiel. Hierbei wird ein Transceiver T verwendet. In Fig. 4 ist lediglich eine Implementierung der drahtlosen Verbindung nicht jedoch der Aufbau der kompletten Delegierteneinheit DU oder der Zentraleinheit CU gezeigt.

Dadurch, dass die Kommunikation in dem drahtlosen Konferenzsystem auf dem IEEE 802.11a/b/g Standard beruht, können bislang erhältliche Komponenten verwendet werden.

Die Zentraleinheit ist dazu ausgestaltet, sowohl mit einzelnen als auch mit einer Gruppe von Delegierteneinheiten DU zu kommunizieren. Somit kann sowohl ein Delegierter mit seiner Delegierteneinheit DU bzw. ein Präsident mit seiner Präsidentensprechstelle als auch eine Gruppe von Delegierten mit ihren entsprechenden Delegierteneinheiten DU mit einem der Delegierteneinheiten DU kommunizieren.

Die drahtlose Kommunikation zwischen der Zentraleinheit CU und den Delegierteneinheiten DU kann verschlüsselt erfolgen. Hierbei können verschiedene Stufen der Verschlüsselung möglich sein, um einen besonders abhörsicheren Betrieb zu ermöglichen.

Die zu der Verschlüsselung der drahtlosen Kommunikation benötigten Schlüssel und Codes werden in den Delegierteneinheiten DU gespeichert. Der Code kann dabei beispielsweise werksseitig eingestellt werden. Alternativ bzw. zusätzlich dazu kann ein Code auch über die drahtlose Kommunikation von der Zentraleinheit CU an die Delegierteneinheiten DU übertragen werden. Somit kann sichergestellt werden, dann lediglich die autorisierten Delegierteneinheiten an der drahtlosen Konferenz teilnehmen können.

Falls eine neue Delegierteneinheit DU in dem drahtlosen Konferenzsystem aktiviert wird, dann kann die Zentraleinheit CU entscheiden, ob die neue Delegierteneinheit DU zu der Konferenz zugelassen wird. Wenn die neue Delegierteneinheit DU zu der drahtlosen Konferenz zugelassen werden soll, dann kann der dazu benötigte Schlüssel über den Downlink-Kanal von der Zentraleinheit an die Delegierteneinheit (Delegiertensprechstelle) übertragen werden. Die Zentraleinheit CU ist ebenfalls in der Lage, eine oder eine Gruppe von Delegierteneinheiten DU von der drahtlosen Konferenz auszuschließen bzw. zu deaktivieren.. Somit kann ein Administrator des drahtlosen Konferenzsystems systemfremde Komponenten dauerhaft integrieren oder dauerhaft ausschließen.

Nachfolgend werden die verschiedenen Betriebsarten des drahtlosen Konferenzsystems beschrieben.

In einer Automatikbetriebsart kann jeder neue Delegierte mit der Delegierteneinheit DU von der Zentraleinheit CU zu der Konferenz zugelassen werden beispielsweise, bis eine maximale Anzahl von zugelassenen Delegierten erreicht wird.

In einer Betriebsart 'First-In-First-Out' kann eine maximale Anzahl von Delegierteneinheiten DU festgelegt werden. Hierbei kann diejenige Delegierteneinheit abgeschaltet werden, deren Mikrofon am längsten eingeschaltet ist, wenn eine neue Delegierteneinheit zu der drahtlosen Konferenz zugelassen werden soll.

In einer Betriebsart 'Request' bzw. Anfrage kann ein Delegierter einen Knopf der Delegierteneinheit DU, beispielsweise den Mikrofonknopf betätigen, wenn er einen Beitrag zur Konferenz abgeben möchte. In einem derartigen Fall kann beispielsweise sowohl das Mikrofon der Delegierteneinheit als auch das Mikrofon der Präsidentensprechstelle blinken. Die Präsidentensprechstelle würde somit ebenfalls ein optisches und/oder akustisches Signal ausgeben. Der Präsident kann einen Knopf (Next) auf seiner Präsidentensprechstelle betätigen. Daraufhin wird das Mikrofon des Delegierten eingeschaltet und die Lampe an seinem Mikrofon kann beispielsweise dauerhaft leuchten. Hierbei kann beispielsweise das optische und/oder akustische Signal an bzw. in der Präsidentensprechstelle deaktiviert werden. Der Präsident kann durch Betätigen eines Knopfes das Mikrofon der Delegierteneinheit deaktivieren und ein Mikrofon einer anderen Delegierteneinheit aktivieren.

In einer Betriebsart 'Automatik, First-In-First-Out Request' kann das System mittels einer Spracheingabe gesteuert werden. Hierzu kann das Konferenzsystem dazu ausgestaltet sein, permanent oder in regemäßigen Intervallen die Hintergrundgeräusche des Konferenzraumes zu erfassen. Sobald ein Mikrofon einer Delegierteneinheit ein Audiosignal empfängt, welches über den Hintergrundgeräuschen liegt, kann es anfangen zu blinken oder ein optisches und/oder akustisches Signal ausgeben und der Präsident kann das Mikrofon aktivieren. Die Differenz zwischen Hintergrundgeräusch und der Einschaltschwelle eines Mikrofons lässt sich vorab beispielsweise durch den Betreiber einstellen. In der Betriebsart Request ist das Betätigen der Next-Taste der Präsidentensprechstelle erforderlich, um einem Delegierten das Wort zu erteilen. Hierzu kann das entsprechende Mikrofon des Delegierten für eine vorab einstellbare Zeit wie beispielsweise 5 Sekunden blinken. Alternativ bzw. zusätzlich dazu kann das Mikrofon der Präsidentensprechstelle ebenfalls während dieser Zeit blinken. Wenn der Präsident hierbei die Next-Taste betätigt, dann wird das Mikrofon der entsprechenden Delegierteneinheit aktiviert.

Der Betreiber kann eine feste Anzahl von maximalen Präsidentensprechstellen und gleichzeitig sprechenden Delegierten oder gleichzeitig aktivierten Delegiertensprechstellen festlegen. Hierbei kann die Summe der gleichzeitig sprechenden Präsidenten und gleichzeitig sprechenden Delegierten konstant gehalten werden, d.h. innerhalb dieser konstanten Anzahl ist die Anzahl von Präsidenten und Delegierten variierbar.

Die Delegiertensprechstellen und die Präsidentensprechstellen können Tasten für Sonderfunktionen aufweisen. Die Präsidentensprechstelle kann beispielsweise eine Taste zum Stummschalten aller Delegierten, eine weitere Taste zum Abschalten aller sprechenden und sich in der Warteschleife befindlichen Konferenzteilnehmer und weitere Tasten aufweisen, mittels welcher externe Einspielungen in das Konferenzsystem ein- oder ausgeschaltet werden. Ferner kann die Präsidentensprechstelle Tasten zur Steuerung bzw. Regelung der Rauminstallation wie z.B. die Lichtanlage, die Klimaanlage etc. aufweisen.

Gemäß einem weiteren Ausführungsbeispiel der Erfindung können Delegierteneinheiten vorgesehen werden, welche nicht durch die Präsidentensprechstelle stumm- bzw. abgeschaltet werden, wenn der Präsident die entsprechenden Funktionen der anderen Delegierteneinheiten aktiviert bzw. deaktiviert. Derartige Delegierteneinheiten können beispielsweise für VIPs verwendet werden. Die anderen Funktionen dieser VIP Delegierteneinheiten entsprechen den oben beschriebenen Delegierteneinheiten. Derartige Delegierteneinheiten können beispielsweise die oben beschriebenen Delegierteneinheiten darstellen, wobei lediglich zusätzliche Funktionalitäten aktiviert werden. Die Aktivierung der zusätzlichen Funktionalitäten kann beispielsweise drahtlos durch die Zentraleinheit erfolgen.

Die Delegiertensprechstellen können optional Tasten aufweisen, um eine Abstimmung bzw. einen Wahlvorgang durchführen zu können. Hierbei können beispielsweise drei Wahltasten oder fünf Wahltasten vorgesehen werden. Alternativ dazu können auch mehr oder weniger Wahltasten vorgesehen werden. Der Wahlvorgang kann in einer offenen Betriebsart und in einer geheimen Betriebsart erfolgen. In einer offenen Betriebsart erfolgt eine offene Abstimmung, so dass dem Delegierten auf der Anzeige der Delegierteneinheit angezeigt wird, wie er gewählt hat. In der geheimen Betriebsart wird lediglich angezeigt, dass er gewählt hat aber nicht wie er gewählt hat. Optional kann der Delegierte so lange seine Wahl verändern, bis der Präsident einen Wahlvorgang abschließt. Der Präsident kann dies beispielsweise durch Betätigung einer Taste auf seiner Präsidentensprechstelle durchführen. Hierbei wird dann die zuletzt durch den Delegierten betätigte Taste ausgewertet. Während des Wahlvorgangs kann eine Lampe am Mikrofon eingeschaltet werden. Nach getätigter Wahl des Delegierten kann die Lampe ausgeschaltet werden. Alternativ dazu kann dieser Vorgang auch umgekehrt durchgeführt werden. Der Wahlvorgang kann derart ausgestaltet sein, dass alle oder nur eine Anzahl von Delegierten wahlberechtigt sind. Dies lässt sich durch Einstellung der Delegierteneinheiten vornehmen. Alternativ bzw. zusätzlich dazu können Kennkarten bzw. Smartcards verwendet werden, wobei jede Delegierteneinheit eine entsprechende Aufnahmeeinheit zur Aufnahme der Kennkarten aufweist. Auf diesen Kennkarten können beispielsweise die persönlichen Daten und Einstellungen für den Delegierten gespeichert werden. Anhand der auf der Kennkarte gespeicherten Informationen sowie den Vorgaben des Betreibers kann ein Delegierter zur Abstimmung zugelassen werden oder nicht.

Gemäß einem Ausführungsbeispiel der Erfindung weist das drahtlose Konferenzsystem einen Konferenzkanal bzw. einen Floor-Channel auf, welcher über die Lautsprecher der Präsidenten- und Delegiertensprechstellen gehört werden kann. Wenn ein Kopfhörer in eine Präsidenten- oder Delegiertensprechstelle eingesteckt wird, dann wird die Audiowiedergabe über den Lautsprecher der Sprechstelle gedämpft oder komplett abgeschaltet. Der Grad der Dämpfung bzw. der Abschaltung kann durch den Hersteller oder durch den Betreiber eingestellt werden. Das drahtlose Konferenzsystem weist vorzugsweise mehrere Kanäle für Dolmetscher bzw. Übersetzer auf. Jede Delegierteneinheit weist ein Bedienelement zur Auswahl der angebotenen Dolmetscher bzw. Übersetzungskanäle auf. Mittels einer Anzeige kann die gewählte Kanalnummer des Übersetzungskanals angezeigt werden. Mittels der Anzeige kann ferner der gewählte Übersetzungskanal bzw. die entsprechende Sprache im Klartext dargestellt werden.

Wenn ein Delegierter mittels seiner Delegierteneinheit zu der Konferenz spricht und der Delegierte einen Kopfhörer auf hat, so wird sein Sprachsignal auch auf seinen Kopfhörer ausgegeben. Der Grad der Lautstärke kann dabei von dem Betreiber voreingestellt werden oder durch den Delegierten eingestellt werden.

Das drahtlose Konferenzsystem weist ferner einen Datenkanal auf, welcher dazu verwendet wird, Mitteilungen zwischen den Delegierten und/oder des Präsidenten zu senden und zu empfangen. Mittels der Anzeige in der Sprechstelle kann die Mitteilung dargestellt werden.

Das drahtlose Konferenzsystem ist ferner dazu in der Lage, Daten an einer zentralen Stelle in das Konferenzsystem einzuspielen und zu den jeweiligen Delegierten an den Delegiertensprechstellen zu übertragen, so dass diese ein Kommunikationsgerät mit ihrer Delegiertensprechstelle verbinden kann, um die Daten empfangen und wiedergeben zu können.

Gemäß einem Ausführungsbeispiel der Erfindung sind die Delegiertensprechstellen bzw. die Delegierteneinheiten robust ausgestaltet und ebenfalls für einen mobilen Einsatz anwendbar. Vorzugsweise wird die Delegiertensprechstelle bzw. die Delegierteneinheit bei Bedienung auf einem Tisch platziert. Die Delegiertensprechstellen bzw. die Delegierteneinheiten können beispielsweise durch einen Knopf oder Taster auf der Unterseite eingeschaltet werden. Alternativ dazu kann das Einschalten durch einen Knopf auf der Oberseite erfolgen.

Die Delegierteneinheiten und die Präsidentensprechstelle können eine Anzeige oder ein Display aufweisen. Mittels der Anzeige kann beispielsweise der Batteriezustand angezeigt werden. Wenn die Batterie nicht mehr ausreichend aufgeladen ist, dann kann ein entsprechendes akustisches und/oder optisches Warnsignal aktiviert werden. Die Batteriezustände können beispielsweise über die Uplink-Kanäle ebenfalls an die Zentraleinheit weitergeleitet werden.

Das drahtlose Konferenzsystem bzw. die Zentraleinheit ist dazu ausgestaltet, die Lautsprecherpegel der Delegierteneinheiten in Abhängigkeit der Anzahl der geöffneten Mikrofone abzusenken. Dazu kann die Zentraleinheit die Anzahl der geöffneten bzw. aktivierten Mikrofone erfassen und mittels der Downlink-Kommunikation DL den Pegel der Delegierteneinheiten DU fernsteuern. Somit kann eine Rückkopplung bei akustisch kritischen Aufbauten vermieden werden. Ferner können akustisch schmale Filter auf den kritischen Frequenzen gesetzt werden, um eine Rückkopplung zu vermeiden.

In dem drahtlosen Konferenzsystem können Limiter vorgesehen werden, um ein Übersteuern auch bei Nahbesprechungen zu vermeiden.

Gemäß einem Ausführungsbeispiel der Erfindung sind die Kopfhörerausgänge der Delegiertensprechstellen kurzschlussfest. Die Delegiertensprechstellen sind ferner dazu ausgestaltet, einen ausreichenden Pegel am Kopfhörerausgang zu liefern, damit sowohl ein Kopfhörer als auch Aufzeichnungsgeräte betrieben werden können.

Die Mikrofone der Delegierteneinheiten können durch den Delegierten und/oder durch eine Zentraleinheit eingestellt werden. Hierbei können die Mikrofone in ihrer Mikrofonempfindlichkeit als auch hinsichtlich ihres Klanges, beispielsweise Tiefen, Mitten und Höhen eingestellt werden. Die Audioausgabe durch die Detegierteneinheiten kann ebenfalls eingestellt werden. Hierbei kann sowohl die Lautstärke als auch der Klang eingestellt werden.

Die Delegierten- und Präsidentensprechstellen gemäß der Erfindung können herkömmliche Mikrofone auf Schwanenhälsen oder anderen mechanischen Halterungen aufweisen. Alternativ dazu können die Sprechstellen Mikrofonarrays aufweisen, welche flach in dem Gehäuse der Sprechstellen eingelassen.

Das drahtlose Konferenzsystem kann mindestens eine Kamera aufweisen, wobei eine Steuerung der Kamera vorgesehen ist, mit welcher ein aktiver Sprecher und sein Umfeld automatisch fokussiert und auf Bildschirmen dargestellt werden.

Zum Betrieb des drahtlosen Konferenzsystems können Mehr-Antennensysteme vorgesehen werden, welche insbesondere hinsichtlich einer betriebssicheren Datenübertragung vorteilhaft sind.

Vorzugsweise erfolgt die drahtlose Kommunikation mit einer Redundanz, um beschädigte Dateien regenerieren zu können. Hierbei kann das Signal mehrfach gesendet werden, um beschädigte Signale erneut zu übertragen.

## Patentansprüche

1. Drahtloses Kortferenzsystem, mit
einer Zentraleinheit (CU) mit einer ersten Sende/Empfangseinheit (ZE).
einer Mehrzahl von Delegiertensprechstellen (DU) jeweils mit einer zweiten Sende/Empfangseinheit (DE),
zumindest einer Präsidentensprechstelle (PU) mit einer dritten Sende/Empfangs-einheit (PE),
wobei die erste Sende/Empfangseinheit (ZE) dazu ausgestaltet ist, mit den zweiten und dritten Sende/Empfangseinheiten (DE, PE) drahtlos zu kommunizieren,
wobei eine Kommunikation von der ersten Sende/Empfangseinheit (ZE) zu den zweiten und/oder dritten Sende/Empfangseinheiten (DE, PE) als eine Downlink-Kommunikation (DL) und wobei eine Kommunikation von den zweiten und/oder dritten Sende/Empfangseinheiten (DE, PE) zu der ersten Sende/Empfangseinheit über eine Uplink-Kommunikation (UL) erfolgt.
**dadurch gekennzeichnet, dass** die Zentraleinheit (CU) eine Frequenzscaneinheit (FSE) zum Scannen von vorab bestimmten Frequenzbändern zur Erfassung von Störern in diesen Frequenzbändern und zum Festlegen der Frequenzbänder für die Downlink- und Uplink-Kommunikation (DL, UL) zumindest bei der Initiierung des drahtlosen Konferenzsystems aufweist,
wobei zumindest einige der Delegiertensprechstellen (DU) und eine Präsidentensprechstelle (PU) in einem Konferenzraum vorgesehen sind und die Präsidentensprechstelle (PU) dazu ausgestaltet ist, die Delegiertensprechstellen (DU) zumindest teilweise zu steuern,
wobei die Zentraleinheit (CU) eine Verbindungsparametereinheit (VPE) aufweist, welche dazu ausgestaltet ist, zumindest einen Parameter der Kommunikation zwischen der Zentraleinheit (CU) und den Delegiertensprechstellen (DU) und/oder der Präsidentensprechstelle (PU) zu erfassen und mit vorab eingestellten Schwellwerten zu vergleichen,
wobei die Zentraleinheit (CU) dazu ausgestaltet ist, die Frequenzkanäle für die Kommunikation mit den Delegierterisprechstellen (DU) und/oder der Präsidentensprechstelle (PU) zu wechseln, wenn der erfasste Parameter der Kommunikation unter den Schwellwert fällt.

2. Kommunikationssystem nach Anspruch 1, wobei die Delegiertensprechstelle (DU) dazu ausgestaltet ist, mittels der zweiten Sende/Empfangseinheit (DE) die Qualität der Downlink-Kommunikation (DL) zu erfassen und mit mindestens einem vorab eingestellten Schwellwert zu vergleichen, wobei die Delegiertensprechstelle (DU) dazu ausgestaltet ist, mittels der zweiten Sende/Empfangseinheit (DE) eine Anfrage zum Wechseln der Frequenzbänder an die Zentraleinheit (CU) zu übermitteln.

3. Drahtlose Konferenzsystem nach Anspruch 1 oder 2, wobei die Zentraleinheit (CU) eine Funktionalitätssteuereinheit (FS) zum Steuern der Funktionalität des drahtlosen Konferenzsystems in Abhängigkeit der Qualität der Uplink- und/oder Downlink-Kommunikation aufweist, wobei die Funktionalltätsteuereinheit (FS) dazu ausgestaltet ist, die Funktionalität des drahtlosen Konferenzsystems zu reduzieren, wenn die Qualität der Uplink- und/oder Downlink-Kommunikation nicht für die benötigte Betriebssicherheit des drahtlosen Kommunikationssystems ausreicht.

4. Drahtloses Konferenzsystem nach einem der Ansprüche 1 bis 3, wobei eine der Mehrzahl der Delegiertensprechstellen (DU) nur eingeschränkt von der Präsidentensprechstelle (PU) gesteuert werden kann.

5. Drahtloses Konferenzsystem nach einem der Ansprüche 1 bis 4, wobei die Delegiertensprechstellen (DU) dazu ausgestaltet sind, für die Delegiertensprechstelle (DU) spezifische Informationen wie z.B. der Batteriezustand, die Qualität der Verbindung oder die Kennung der Delegiertensprechstelle über die Uplink-Kommunikation (UL) an die Zentraleinheit (CU) zu senden.

6. Drahtloses Konferenzsystem nach einem der Ansprüche 1 bis 5, wobei die Zentraleinheit (CU) dazu ausgestaltet ist, Steuersignale an die Delegiertensprechstellen (DU) zu senden.

7. Verfahren zum Steuern eines drahtlosen Konferenzsystems, welches eine Zentraleinheit (CU), eine Mehrzahl von Delegiertensprechstellen (DU) und zumindest eine Präsidentensprechstelle (PU) aufweist, wobei zumindest einige der Delegiertensprechstellen (DU) und die Präsidentensprechstelle (PU) in einem Konferenzraum angeordnet sind,
**gekennzeichnet durch** die Schritte:
Scannen von vorab bestimmten Frequenzbändern zur Erfassung von Störern In diesen Frequenzbändern,
Festlegen der Frequenzbänder für eine Downlink- und eine Uplink-Kommunikation (DL, UL) zwischen den Delegiertensprechstellen (DU) und der Präsidentensprechstelle (PU) sowie der Zentraleinheit (CU) zumindest bei der Initiierung des drahtlosen Konferenzsystems,
Erfassen von zumindest einem Parameter der Kommunikation zwischen der Zentraleinheit (CU) und den Delegiertensprechstellen (DU) und/oder der Präsidentensprechstelle (PU) und Vergleichen der erfassten Parameter mit vorab eingestellten Schwellwerten, und
Wechseln der Frequenzkanäle für die Kommunikation zwischen der Zentraleinheit (CU) und den Delegiertensprechstellen (DU) und/oder der Präsidentensprechstelle (PU), wenn der erfasste Parameter der Kommunikation unter den Schwellwert fällt, wobei die Präsidentensprechstelle (PU) dazu ausgestaltet ist, die Delegiertensprechstellen zumindest teilweise zu steuern.

## Claims

1. A wireless conference system, comprising
a central unit (CU) with a first transmitting/receiving unit (ZE),
a plurality of delegate terminals (DU) each comprising a second transmitting/receiving unit (DE),
at least one president terminal (PU) comprising a third transmitting/receiving unit (PE),
the first transmitting/receiving unit (ZE) being configured to communicate wirelessly with the second and third transmitting/receiving units (DE, PE),
a communication from the first transmitting/receiving unit (ZE) to the second and/or third transmitting/receiving units (DE, PE) taking place as a downlink communication (DL) and a communication from the second and/or third transmitting/receiving units (DE, PE) to the first transmitting/receiving unit taking place by means of an uplink communication (UL),
**characterised in that** the central unit (CU) has a frequency scan unit (FSE) for scanning pre-determined frequency bands to detect interferences in those frequency bands and to establish the frequency bands for the downlink and uplink communication (DL, UL) at least during the initialization of the wireless conference system,
at least some of the delegate terminals (DU) and a president terminal (PU) being provided in a conference room and the president terminal (PU) being configured to at least partially control the delegate terminals (DU),
the central unit (CU) having a connection parameter unit (VPE) which is configured to detect at least one parameter of the communication between the central unit (CU) and the delegate terminals (DU) and/or the president terminal (PU) and to compare it with pre-set threshold values,
the central unit (CU) being configured to change the frequency channels for the communication with the delegate terminals (DU) and/or the president terminal (PU) when the detected parameter of the communication falls below the threshold value.

2. A communication system according to claim 1, wherein the delegate terminal (DU) is configured to detect the quality of the downlink communication (DL) by means of the second transmitting/receiving unit (DE) and to compare it with at least one pre-set threshold value, the delegate terminal (DU) being configured to convey a request to change the frequency bands to the central unit (CU) by means of the second transmitting/receiving unit (DE).

3. A wireless conference system according to claim 1 or 2, wherein the central unit (CU) has a functionality control unit (FS) for controlling the functionality of the wireless conference system in dependence on the quality of the uplink and/or downlink communication, the functionality control unit (FS) being configured to reduce the functionality of the wireless conference system when the quality of the uplink and/or downlink communication is not sufficient for the required operating reliability of the wireless communication system.

4. A wireless conference system according to any one of claims 1 to 3, wherein one of the plurality of delegate terminals (DU) can be controlled by the president terminal (PU) only to a limited extent.

5. A wireless conference system according to any one of claims 1 to 4, wherein the delegate terminals (DU) are configured to send to the central unit (CU) by means of the uplink communication (UL) information specific to the delegate terminal (DU), such as, for example, the battery condition, the quality of the connection or the identifier of the delegate terminal.

6. A wireless conference system according to any one of claims 1 to 5, wherein the central unit (CU) is configured to send control signals to the delegate terminals (DU).

7. A method for controlling a wireless conference system that has a central unit (CU), a plurality of delegate terminals (DU) and at least one president terminal (PU), at least some of the delegate terminals (DU) and the president terminal (PU) being disposed in a conference room,
**characterised by** the steps of:
scanning pre-determined frequency bands to detect interferences in those frequency bands,
establishing the frequency bands for a downlink and an uplink communication (DL, UL) between the delegate terminals (DU) and the president terminal (PU) and the central unit (CU) at least during the initialization of the wireless conference system,
detecting at least one parameter of the communication between the central unit (CU) and the delegate terminals (DU) and/or the president terminal (PU) and comparing the detected parameters with pre-set threshold values, and
changing the frequency channels for the communication between the central unit (CU) and the delegate terminals (DU) and/or the president terminal (PU) when the detected parameter of the communication falls below the threshold value, the president terminal (PU) being configured to at least partially control the delegate terminals.

## Revendications

1. Système de conférence sans fil, comprenant:
une unité centrale (CU) avec une première unité d'émission/réception (ZE),
une pluralité de postes de délégués (DU) équipés chacun d'une deuxième unité d'émission/réception (DE),
au moins un poste de président (PU) équipé d'une troisième unité d'émission/réception (PE),
dans lequel la première unité d'émission/réception (ZE) est conçue pour communiquer sans fil avec les deuxièmes et troisièmes unités d'émission/réception (DE, PE),
dans lequel une communication de la première unité d'émission/réception (ZE) vers les deuxièmes et/ou troisièmes unités d'émission/réception (DE, PE) est une communication dite descendante (DL) et une communication des deuxièmes et/ou troisièmes unités d'émission/réception (DE, PE) vers la première unité d'émission/réception (ZE) est une communication dite ascendante (UL),
**caractérisé en ce que**
l'unité centrale (CU) présente une unité de balayage de fréquences (FSE) pour balayer des bandes de fréquences déterminées au préalable afin de détecter des parasites dans ces bandes de fréquences et de fixer les bandes de fréquences pour les communications descendantes et ascendantes (DL, UL) au moins lors du démarrage du système de conférence sans fil,
dans lequel il est prévu au moins quelques-uns des postes de délégués (DU) et un poste de président (PU) dans une salle de conférence et le poste de président (PU) est conçu de façon à commander au moins en partie les postes de délégués (DU),
dans lequel l'unité centrale (CU) présente une unité de paramétrage des liaisons (VPE), qui est conçue pour détecter au moins un paramètre de la communication entre l'unité centrale (CU) et les postes de délégués (DU) et/ou le poste de président (PU) et pour le comparer à des valeurs de seuil réglées au préalable,
dans lequel l'unité centrale (CU) est conçue pour changer les canaux de fréquence pour la communication avec les postes de délégués (DU) et/ou le poste de président (PU), lorsque le paramètre détecté de la communication tombe en dessous de la valeur de seuil.

2. Système de communication selon la revendication 1, dans lequel le poste de délégué (DU) est conçu pour détecter, au moyen de la deuxième unité d'émission/réception (DE), la qualité de la communication descendante (DL) et pour la comparer à au moins une valeur de seuil déterminée au préalable, dans lequel le poste de délégué (DU) est conçu pour transmettre, au moyen de la deuxièmes unité d'émission/réception (DE), une demande de changement des bandes de fréquences à l'unité centrale (CU).

3. Système de conférence sans fil selon la revendication 1 ou 2, dans lequel l'unité centrale (CU) présente une unité de commande de fonctionnalité (FS) pour commander la fonctionnalité du système de conférence sans fil en fonction de la qualité de la communication ascendante et/ou descendante, dans lequel l'unité de commande de fonctionnalité (FS) est conçue pour réduire la fonctionnalité du système de conférence sans fil, lorsque la qualité de la communication ascendante et/ou descendante ne suffit pas pour la sécurité de fonctionnement nécessaire du système de communication sans fil.

4. Système de conférence sans fil selon l'une quelconque des revendications 1 à 3, dans lequel un de la pluralité des postes de délégués (DU) ne peut être commandé que de manière limitée par le poste de président (PU).

5. Système de conférence sans fil selon l'une quelconque des revendications 1 à 4, dans lequel les postes de délégués (DU) sont conçus pour envoyer à l'unité centrale (CU) des informations spécifiques pour le poste de délégué (DU), comme par exemple l'état de la batterie, la qualité de la liaison ou l'identification du poste de délégué via la communication ascendante (UL).

6. Système de conférence sans fil selon l'une quelconque des revendications 1 à 5, dans lequel l'unité centrale (CU) est conçue pour envoyer des signaux de commande aux postes de délégués (DU).

7. Procédé pour commander un système de conférence sans fil, qui présente une unité centrale (CU), une pluralité de postes de délégués (DU) et au moins un poste de président (PU), dans lequel au moins quelques-uns des postes de délégués (DU) et le poste de président (PU) sont disposés dans une salle de conférence, **caractérisé par** les étapes suivantes:
balayer des bandes de fréquences déterminées au préalable afin de détecter des parasites dans ces bandes de fréquences,
fixer les bandes de fréquences pour une communication descendante et une communication ascendante (DL, UL) entre les postes de délégués (DU) et le poste de président (PU) ainsi que l'unité centrale (CU) au moins lors du démarrage du système de conférence sans fil,
détecter au moins un paramètre de la communication entre l'unité centrale (CU) et les postes de délégués (DU) et/ou le poste de président (PU) et comparer les paramètres détectés à des valeurs de seuil réglées au préalable, et
changer les canaux de fréquences pour la communication entre l'unité centrale (CU) et les postes de délégués (DU) et/ou le poste de président (PU), lorsque le paramètre détecté de la communication tombe en dessous de la valeur de seuil, dans lequel le poste de président (PU) est conçu pour commander au moins partiellement les postes de délégués.
